(19) **Europäisches Patentamt**

**European Patent Office**

**Office européen des brevets**

(11) Veröffentlichungsnummer: **0 311 959 B1**

(12) **EUROPÄISCHE PATENTSCHRIFT**

(45) Veröffentlichungstag der Patentschrift: **22.04.92**

(51) Int. Cl.5: **D01H 9/18**, B65H 67/06, B65G 1/12

(21) Anmeldenummer: **88116800.9**

(22) Anmeldetag: **10.10.88**

(54) **Hänge-Transportsystem.**

(30) Priorität: **12.10.87 DE 3734505**

(43) Veröffentlichungstag der Anmeldung:
**19.04.89 Patentblatt 89/16**

(45) Bekanntmachung des Hinweises auf die
Patenterteilung:
**22.04.92 Patentblatt 92/17**

(84) Benannte Vertragsstaaten:
**CH DE ES FR GB IT LI**

(56) Entgegenhaltungen:
**EP-A- 0 297 332**
**DE-A- 3 709 540**
**GB-A- 27 294**
**NL-A- 8 400 382**
**US-A- 3 828 682**

(73) Patentinhaber: **VEIT TRANSPO GMBH**
**Rudolf-Diesel-Strasse 3**
**W-8910 Landsberg/Lech(DE)**

(72) Erfinder: **Schönenberger, Rolf, Dipl.-Ing.**
**Dipl.-Wirtsch.Ing.**
**Wettersteinstrasse 28**
**W-8910 Landsberg(DE)**
Erfinder: **Kunze, Walter**
**Tauentzienstrasse 47**
**W-8900 Augsburg(DE)**
Erfinder: **Hafner, Josef, Dr.-Ing.**
**Wettersteinstrasse 12**
**W-8910 Landsberg(DE)**

(74) Vertreter: **Patentanwälte Grünecker, Kinkeldey, Stockmair & Partner**
**Maximilianstrasse 58**
**W-8000 München 22(DE)**

## Beschreibung

Die Erfindung bezieht sich auf ein Hänge-Transportsystem der im Oberbegriff von Anspruch 1 erläuterten Art.

Ein derartiges Hänge-Transportsystem ist aus dem Dokument US-A-3 828 682 bekannt. Das vorbekannte Hänge-Transportsystem wird dazu verwendet, Spulen von einem Flyer zu einer Ringspinnmaschine zu transportieren. Da die Ringspinnmaschine eine wesentlich größere Spulenkapazität aufweist und da immer genügend Spulen vom Flyer vorhanden sein müssen, um abgesponnene Spulen sofort ersetzen zu können, ist es notwendig, die vom Flyer kommenden Förderzüge mit den Spulen zunächst zwischenzulagern und danach in der erforderlichen Länge zusammenzustellen. Zu diesem Zweck wird in der vom Flyer kommenden Hauptstrecke eine Vielzahl von Weichenzungen eingebaut, wobei jede Weichenzunge in eine Lagerstrecke einmündet. An der gegenüberliegenden Seite der Lagerstrecken sind wiederum Weichen angeordnet, die die Lagerstrecken wieder zu einer zweiten Hauptstrecke vereinigen, die die Verbindung zur Ringspinnmaschine übernimmt. Je nach Anzahl der erforderlichen Maschinenstrecken (und der vorhandenen Ringspinnmaschinen) teilt sich die zweite Hauptstrecke danach wiederum mit Hilfe von Weichenzungen in die einzelnen Maschinenstrecken auf. Bislang wurden die Lagerstrecken etwa in der gleichen Transportebene angeordnet wie die Maschinenstrecken, wobei der erhöhte Platzbedarf im Gebäude in Kauf genommen werden mußte.

Der Erfindung liegt somit die Aufgabe zugrunde, ein Hänge-Transportsystem der genannten Art derart auszugestalten, daß der Platzbedarf entscheidend verringert werden kann.

Die Aufgabe wird durch die kennzeichnenden Merkmale des Anspruchs 1 gelöst.

Durch die Verlagerung der Lagerstrecken in den Bereich oberhalb der Transportebene der Maschinenstrecken wird einerseits die relativ hohe Raumhöhe in den Spinnereibetrieben optimal ausgenutzt. Der sonst für die Lagerung der Spulen benötigte Platz der Grundfläche steht somit zum Aufstellen weiterer Spinnereimaschinen zur Verfügung. Durch die Verwendung der erfindungsgemäßen Verbindungseinrichtungen ist es weiterhin möglich, Spulen auch über senkrechte Niveauunterschiede zu transportieren, ohne daß diese sich berühren, was zur Beschädigung des Spulenfadens führen könnte.

In der Ausgestaltung nach Anspruch 2 wird die Überführung der Spulen zwischen den Strecken vereinfacht.

In der Ausführungsform nach Anspruch 3 kann das erfindungsgemäße Hänge-Transportsystem beispielsweise in einer Ringspinnmaschine dazu verwendet werden, vollständig zusammengestellte Züge in voller Länge auf den Lagerstrecken bereitzuhalten, die dann beim Spulenwechsel komplett in die Ringspinnmaschine überführt werden können.

Die Ausgestaltung nach Anspruch 4 ist beispielsweise zum Partienspinnen geeignet, bei dem über die Gesamtlänge der Maschine unterschiedliche Partien abgesponnen werden. Durch die beschriebene Ausgestaltung ist es möglich, auch die in Teilzügen zusammengefaßten Spulen einzelner Partien zu wechseln, ohne jeweils den gesamten Block austauschen zu müssen.

Durch Verwendung eines wendelförmig geführten Schienenstranges nach Anspruch 5 als Verbindungseinrichtung kann das Gefälle so gering gehalten werden, daß die Spulen ohne gegenseitige Berührung auf einer schiefen Ebene transportiert werden können.

Nach Anspruch 6 können in dem wendelförmigen Schienenstrang an beliebiger Stelle Abzweigungen vorgesehen werden, so daß beliebig viele zwischen der obersten und der untersten Transportebene liegende Zwischenebenen beschickt werden können.

Die Ansprüche 7 und 8 beschreiben eine weitere Verbindungseinrichtung in Form eines Revolverliftes, bei dem die Spulen nicht mehr über schiefe Ebenen geführt werden müssen. Vielmehr werden hierbei Lagerstrecken und Maschinenstrecken je nach Bedarf untereinander ausgetauscht.

Ein ähnliches Prinzip, d. h. der Austausch von Lager-und Maschinenstrecke, liegt der Verbindungseinrichtung nach Anspruch 9 zugrunde. Auch durch im Stand der Technik hinlänglich bekannte Lenkergetriebe ist es möglich, eine Strecke aus einer Lagerposition an eine vorbestimmte Stelle in einer Maschinenposition derart zu bewegen, daß die Spulen während der Verschwenkbewegung nicht aus ihrer senkrechten Lage gelangen.

Bei Ringspinnmaschinen mit einer Mehrzahl von in einem Gatter untergebrachten Spinnstellen ist es bisher bekannt, direkt in das Gatter Maschinenstrecken einlaufen zu lassen, wobei die Maschinenstrecken im Gatter eine der Anzahl der Spinnstellen angepaßte Anzahl von Spulen aufnehmen können. Die Spulen werden dann direkt von den Maschinenstrecken abgesponnen. Das Wechseln der abgesponnen Spulen erfolgt bei dieser Ausführungsform im Block, wobei alle Spulen zusammen aus dem Gatter herausgefahren und ein Zug neuer Spulen eingefahren wird. Der Nachteil dieses Vorgehens liegt auf der Hand, da Spulen niemals mit der gleichen Länge Faden bestückt sind. Der Blockwechsel muß somit dann erfolgen, wenn die erste der Spulen abgesponnen ist. Dadurch fällt jedoch viel Abfall an. Es ist weiterhin bekannt, im Gatter feste Hängeplätze für die Spulen vorzusehen und vor das Gatter eine Maschinenstrecke einlaufen zu lassen, auf der ein Zug mit Reservespulen läuft. Die im Gatter jeweils abgespulten Spulen werden im wilden Wechsel per Hand durch eine entsprechende Spule aus der Reserve-Maschinenstrecke ersetzt, wobei die Reservespule vom Förderzug auf der Maschinenstrecke abgenommen und in das Gatter eingehängt werden muß. Bei dieser Vorgehensweise müssen die relativ schweren Spulen über Kopf in möglichst kurzer Zeit eingehängt werden, wobei außer einem gewissen Kraftaufwand auch Geschicklichkeit und Sorgfalt nötig ist, damit keine der Spulen beschädigt wird oder gar bereits einlaufende Fäden abgerissen werden.

Durch die Ausgestaltung nach den Ansprüchen 10 und 11 ist es hingegen möglich, die Vorteile von blockweisem und wildem Wechsel zu vereinigen, so daß jede Einzelspule individuell ersetzt und somit weitgehend abgesponnen wird, jedoch trotzdem ein gesamter Zug leerer Spulen komplett aus der Maschine entfernt werden kann.

Ausführungsbeispiele der Erfindung werden nachfolgend anhand der Zeichnungen näher erläutert. Es zeigen:

Fig 1 eine schematische Darstellung des Hänge-Transportsystems zur Versorgung von Ringspinnmaschinen,

Fig. 2 ein erstes Ausführungsbeispiel einer Verbindungseinrichtung,

Fig. 3 ein zweites Ausführungsbeispiel einer Vertindungseinrichtung,

Fig. 4 ein drittes Ausführungsbeispiel einer Verbindungseinrichtung,

Fig. 5 ein viertes Ausführungsbeispiel einer Verbindungseinrichtung,

Fig. 6 ein fünftes Ausführungsbeispiel einer Verbindungseinrichtung, und

Fig. 7 eine schematische Darstellung einer Ringspinnmaschine mit im Gatter angeordneten Maschinenstrecken.

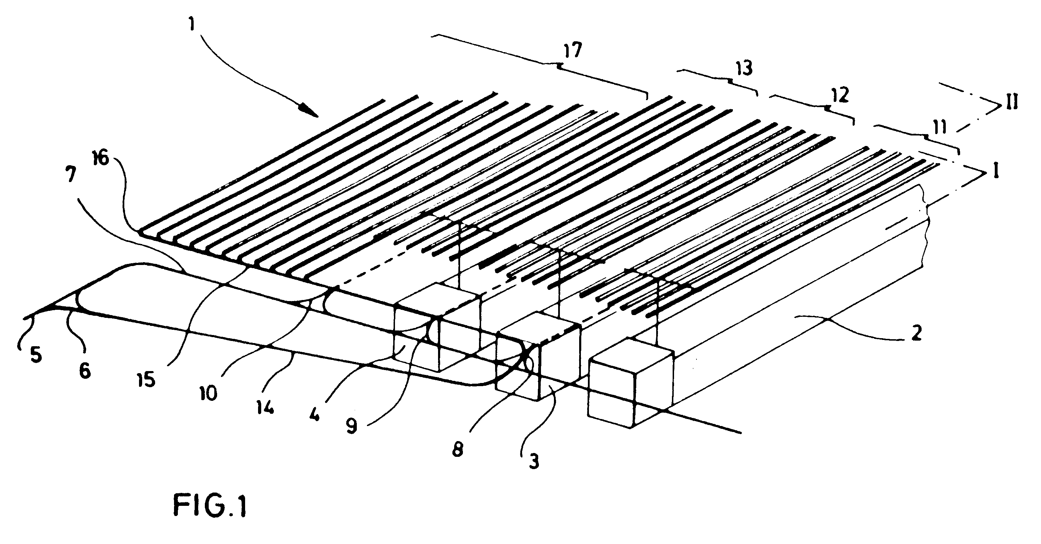

Aus Fig. 1 ist ein Hänge-Transportsystem 1 ersichtlich, das zum Beliefern einer Mehrzahl nur schematisch angedeuteter Ringspinnmaschinen 2, 3 und 4 dient. Das Hänge-Transportsystem enthält eine erste Hauptstrecke 5, die bespielsweise von einem nicht dargestellten Flyer kommt. Die erste Hauptstrecke 5 läuft über eine Weichenanlage 6 in eine Zufuhrstrecke 7, von der weitere Weichenanlagen 8, 9, 10 abzweigen, die über nicht gezeichnete Weichenverbindungen in jeweils eine Gruppe von Maschinenstrecken 11, 12, 13 hineinführen. Jeder der Ringspinnmaschinen 2, 3, 4 ist eine Gruppe der Maschinenstrecken 11,12,13 zugeordnet, die sich direkt im Arbeitsbereich der jeweiligen Maschine befindet. Die Maschinenstrecken 11, 12, 13 können entweder direkt im Gatter angeordnet sein, wobei von den Maschinenstrecken abgesponnen wird, und/oder als Reservestrecken ausgebildet werden. Die Maschinenstrecken 11, 12, 13 befinden sich in einer ersten Transportebene I.

Die Weichenanlage 6 führt weiterhin über einen als Verbindungseinrichtung dienenden wendelförmig gebogenen Schienenstrang 14 auf eine zweite Zufuhrstrecke 15, die in einer zweiten Transportebene II liegt, die mit Abstand oberhalb der ersten Transportebene I angeordnet ist. Von der zweiten Zufuhrstrecke 15 zweigen eine Vielzahl Weichen 16 ab, von denen jeweils eine in eine Lagerstrecke 17 führt. In Fig. 1 sind aus Gründen der Übersichtlichkeit die Ringspinnmaschinen unter den Lagerstrecken 17 und die Lagerstrecken über den Ringspinnmaschinen 2, 3, 4 weggelassen. Nach Bedarf können jedoch Lagerstrecken im gesamten Bereich oberhalb der Maschinen vorgesehen werden. Die Lagerstrecken 17 sind entweder als Stichstrecken oder auf der anderen Seite mit spiegelbildlich ausgestalteten Zufuhrstrekken, Weichen und einer Verbindungseinrichtung versehen, so daß die Förderzüge auch von hinten ein- und ausgefahren werden können. Insbesondere kann diese spiegelbildliche Ausgestaltung dazu verwendet werden, die Förderzüge mit leeren Spulen hinten aus den Ringspinnmaschinen herauszufahren, während von vorn volle Züge aus den Lagerstrecken eingefahren werden.

Der wendelförmig gebogene Schienenstrang wird zweckmäßigerweise so geführt, daß das Gefälle etwa 10° beträgt. Die Spulenzüge können somit von der ersten Hauptstrecke 5 entweder direkt in die Maschinenstrecken 11, 12, 13 eingefahren oder über den wendelförmig gebogenen Schienenstrang 14 nach oben in die zweite Transportebene II geführt, und dort in den Lagerstrecken 17 in entsprechender Länge zusammengestellt gespeichert werden. Die Lagerstrecken 17 haben deshalb zweckmäßigerweise eine derartige Länge, daß auf jeder der Lagerstrecken 17 ein gesamter in die Ringspinnmaschine einfahrbarer Zug zwischengelagert werden kann. Dieser Zug kann dann nach Bedarf abgerufen, über den Schienenstrang 14 nach unten geführt und in die Maschinenstrecken 11, 12, 13 eingefahren werden.

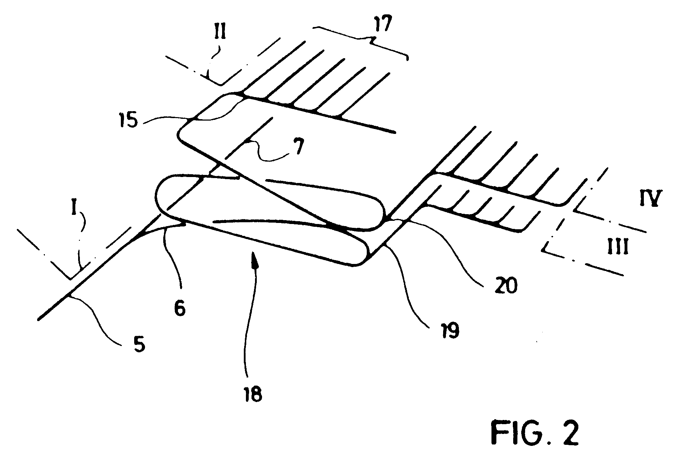

Fig. 2 zeigt eine Abwandlung der Verbindungseinrichtung in Form eines in Mehrfachwendeln gelegten Schienenstranges 18. Zwischen dem Einfahrtpunkt und dem Ausfahrtpunkt der Wendel können an beliebigen Stellen weitere Weichenanordnungen 19 und 20 untergebracht werden. Der auf der Hauptstrecke 5 ankommende Förder zug kann somit analog Fig. 1 über die erste Weichenanlage 6 in die erste Zufuhrstrecke 7 zur ersten Transportebene I und über den gesamten wendelförmigen Schienenstrang 18 nach oben in die zweite Zufuhrstrecke 15 und von dort in die Lagerstrecke 17 geführt werden.

Durch die Anordnung der Weichen 19 und 20 ist es jedoch auch möglich, Zwischenebenen III und IV zu beliefern, die entweder mit Maschinenstrecken oder mit Lagerstrecken bestückt sind. Beispielsweise kann die Transportebene III dazu verwendet werden, Reserve-Maschinenstrecken vorzusehen, von denen die Spulen dann herunter in das Gatter überführt werden. Dies hat den Vorteil, daß die Bauhöhe außerhalb des Gatters vergrößert werden kann, so daß entweder eine Bedienperson oder automatisch arbeitende Geräte ungehindert hindurchlaufen können.

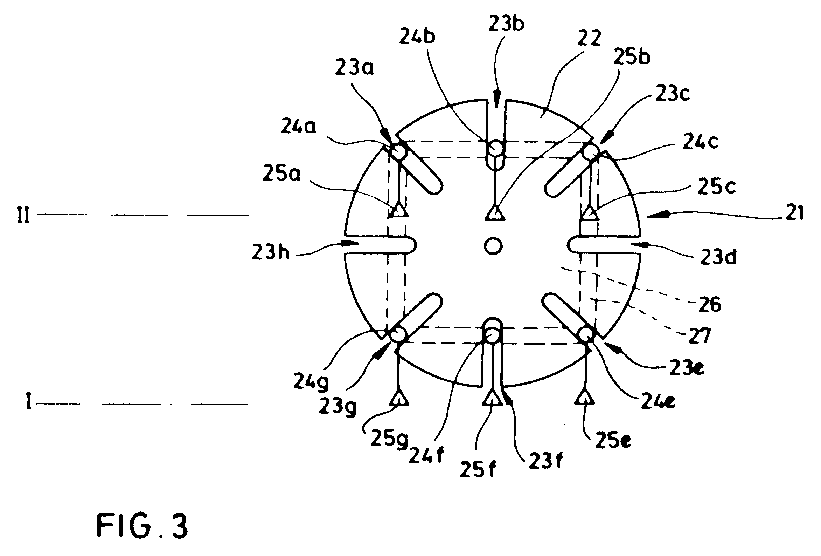

In Fig. 3 ist eine weitere Verbindungseinrichtung zwischen vertikal beabstandeten Transportebenen in Form eines Revolverliftes 21 ersichtlich. Der Revolverlift wird anstelle der Lagerstrecken 17 in Fig. 1 eingeschaltet und über die zweite Zufuhrstrecke 15 in der zweiten Transportebene beliefert. Zusätzlich oder alternativ können die Förderzüge auch über die erste Zufuhrstrecke 7 in den Revolverlift hinein-und/oder aus ihm herausgefahren werden.

Der Revolverlift 21 weist zwei identisch ausgebildete, drehbare Scheiben 22 auf, die mit Abstand zueinander angeordnet sind. In jeder der Scheiben 22 sind Aussparungen 23a bis 23h vorgesehen, die peripher offen oder geschlossen sein können. Die Aussparungen 23 jeder Scheibe 22 sind fluchtend zueinander ausgerichtet und zur Aufnahme von Führungsstangen 24 ausgebildet, an denen Schienenstücke 25 befestigt sind. Im dargestellten Ausführungsbeispiel sind acht Aussparungen vorgesehen, wobei jedoch nur sechs von ihnen Führungsstangen enthalten. Die Führungsstangen sind in Gruppen zu jeweils drei Stück angeordnet, wobei zwischen jeder Gruppe eine freie Aussparung 23d und 23h verbleibt. Jeder Scheibe 22 ist ein feststehender Rahmen 26 zugeordnet, in dem eine Kulissenführung 27 für die Führungsstangen 24 ausgespart ist. Im dargestellten Ausführungsbeispiel bildet die Kulissenführung 27 ein Quadrat, um eine geradlinige Führung der Schienen ohne Kippen der Spulen sicherzustellen.

Die in Fig. 3 in den oberen Aussparungen 23a bis 23c aufgenommenen Führungsstangen der Schienenstücke 25a bis 25c befinden sich in der Transportebene II in der Lagerposition und können gegebenenfalls über die zweite Zufuhrstrecke beschickt werden. Die freien Ausnehmungen 23d und 23h befinden sich in einer Zwischenposition, so daß eventuell dort aufgenommene Schienenstücke in eine Zwischenebene überführt werden könnten. Die den unteren drei Führungsstangen 23e bis 23g zugeordneten Schienenstücke 25e bis 25g dienen als Maschinenstrecken und befinden sich in der ersten Transportebene. Wird ein Austausch gewünscht, so werden die Scheiben 22 um 180° gedreht, wobei die Schienen 25 durch ihre in der Kulissenführung 27 geführten Führungsstangen 24 immer genau in Förderposition bleiben, so daß die Spulen nicht gekippt werden. Diese Art der Verbindungseinrichtung eignet sich auch besonders zum Partienspinnen. Für diesen Zweck wird pro Partie ein Revolverlift 21 eingesetzt, so daß die Partien unabhängig voneinander gewechselt werden können. Sind die Partien gewechselt, so können die leeren Züge aus der oberen Transportebene II herausgefahren werden.

Anstelle des Revolverliftes 21 können als Verbindungseinrichtung auch geeignete Getriebe verwendet werden, die sicherstellen, daß bei der Absenkbewegung die Spulen nicht schräggestellt werden, so beispielsweise die hinlänglich bekannten Gelenkarme, Trapezgelenke oder senkrecht wirkenden Scherengelenke.

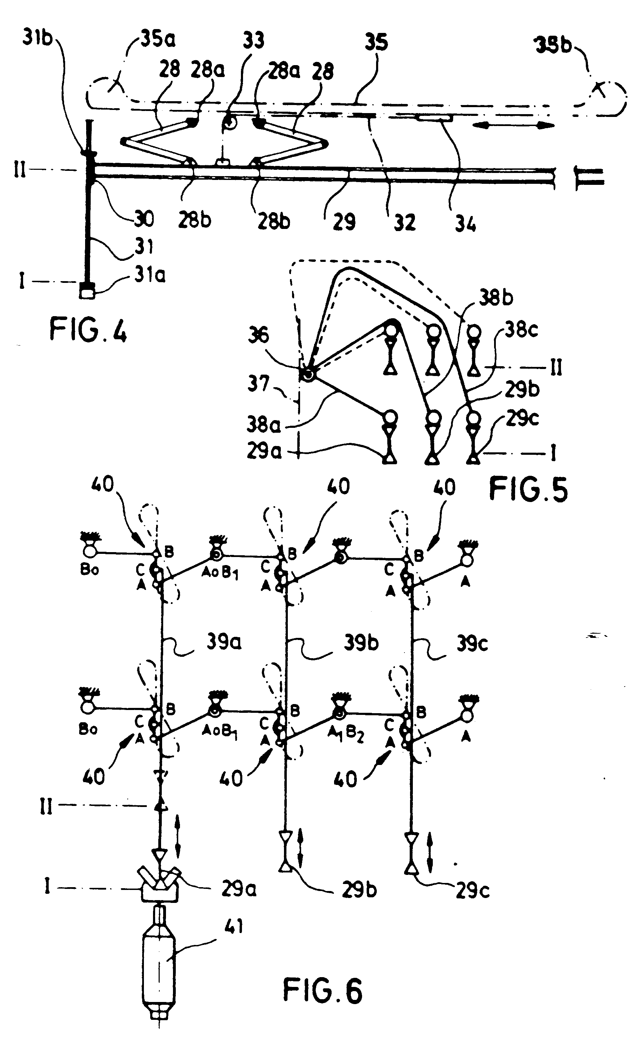

Beispiele derartiger Getriebe sind die in den Fig. 4 bis 6 dargestellten Geradführungen. Fig. 4 zeigt in schematischer Darstellung die Seitenansicht einer derartigen Geradführung mit Hilfe zweier Kniehebel 28, die mit ihren oberen Enden 28a an der Decke oder einem nicht dargestellten Gestell drehbar festgelegt sind und deren untere Enden 28b mit einem Schienenstück 29 ebenfalls drehbar verbunden sind. Das Schienenstück 29 ist an einem Ende mit einer Führung, beispielsweise einer Gleitführung 30 verbunden, mit deren Hilfe es auf einem senkrechten Stab 31 zwischen einem unteren Anschlag 31a und einem oberen Anschlag 31b gleitet. Beim Anschlag an den unteren Anschlag 31a befindet sich das Schienenstück 29 in der Transportebene I, wo es als Maschinenstrecke verwendet werden kann. Beim Anschlag am oberen Anschlag 31b befindet sich das Schienenstück 29 in der zweiten Transportebene II und kann als Lagerstrecke verwendet werden. Zwischen den Befestigungspunkten 28a bzw. 28b der Kniehebel 28 am Schienenstück 29 ist eine Hubkette 32 mit dem Schienenstück 29 verbunden, die über eine Umlenkrolle 33 läuft und mit einem Block 34 fest verbunden ist. Der Block 34 ist mitnehmbar mit einer Antriebskette 35 verbunden, die zwischen Umlenkstellen 35a undf 35b in Richtung des Pfeiles hin- und herbewegt werden kann, so daß im dargestellten Ausführungsbeispiel bei einer Bewegung des Blockes 34 nach links das Schienenstück 29 abgesenkt und bei einer Bewegung des Blockes 34 nach rechts angehoben wird. Je nach Länge der Schienenstücke 29 können auch vier oder noch mehr Kniehebel verwendet werden. Auch diese Verbindungseinrichtung ist für das Partienspinnen geeignet.

Fig. 5 zeigt ein Beispiel einer Geradführung mit Hilfe eines Lenkergetriebes in schematischer Darstellung. Das Lenkergetriebe weist eine Drehachse 36 auf, die sich im dargestellten Ausführungsbeispiel an der Mittellinie 37 der nicht dargestellten Ringspinnmaschine befindet. Um die Drehachse 36 sind drei Lenker 38a, 38b, 38c mit ihrem einen Ende drehbar gelagert, wobei ihr anderes Ende jeweils drehbar mit einem zu bewegenden Schienenstück 29a, 29b, 29c verbunden ist. Jeder der Lenker 38 ist in bekannter Weise derart ausgestaltet, daß sich beim Anheben der Schienenstücke 29a, 29b,29c aus der ersten Transportebene I in die gestrichelt gezeichnete Stellung der Transportebene II und beim Wiederabsenken keine Überschneidungen ergeben.

In Fig. 6 wird als Verbindungseinrichtung die Watt'sche Geradführung verwendet. Da die Wirkungsweise dieser Geradführung ebenfalls hinlänglich bekannt ist, kann auf eine nähere Erläuterung verzichtet werden. Es sei lediglich angemerkt, daß die Schienenstücke 29a, 29b, 29c an jeweils einer gerade geführten Stange 39a, 39b, 39c angeordnet ist, wobei jede der Stangen 39a, 39b, 39c durch jeweils ein Paar senkrecht untereinander angeordneter, identisch ausgebildeter Doppelschwingen 40 geführt wird. Auf diese Weise kann beispielsweise die in Fig. 6 am Schienenstück 29a laufende Spule 41 aus der Transportebene I in die gestrichelt gezeichnete Transportebene überführt werden.

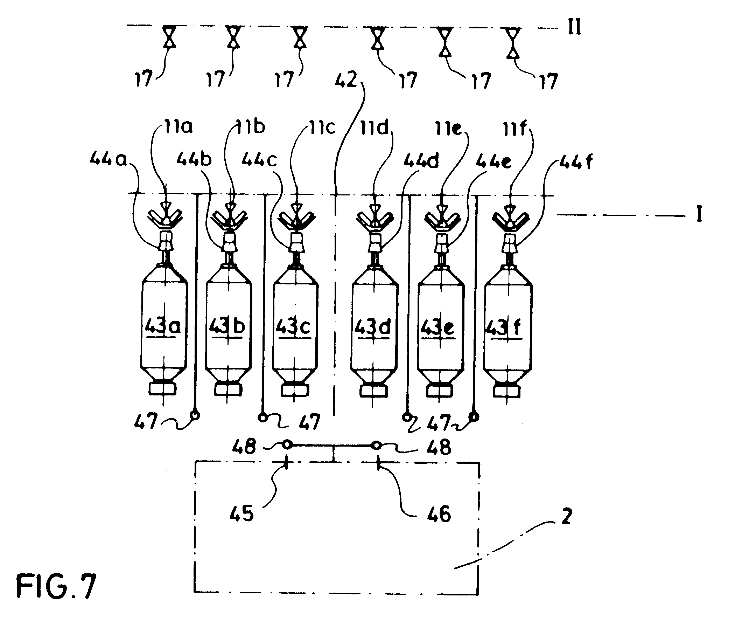

Fig.7 zeigt in schematischer Darstellung beispielsweise die Ringspinnmaschine 2 aus Fig. 1. Oberhalb der Ringspinnmaschine 2 ist ihr Gatter 42 angeordnet. Am Gatter 42 sind z. B. sechs der feststehenden Maschinenstrecken 11a bis 11f in der gleichen Transportebene I vorgesehen. An jeder der Maschinenstrecken 11 hängt ein Förderzug mit einer Mehrzahl von Befestigungsvorrichtungen für Spulen 43, von denen jeweils nur eine einzige Befestigungsvorrichtung 44a bis 44f dargestellt ist. Die Befestigungseinrichtungen sind zweckmäßigerweise Schnellwechselhülsen. An jeder der Befestigungsvorrichtungen hängt eine Spule, wobei wiederum nur sechs Spulen 43a bis 43f dargestellt sind. In der Ringspinnmaschine 2 sind eine Mehrzahl von Spinnstellen vorgesehen, die auf jeder Seite des Gatters 42 in einer Reihe 45 bzw. 46 angeordnet sind. Die Abstände der Spinnstellen 45 bzw. 46 untereinander sind halb so groß wie die Abstände der Befestigungsvorrichtungen 44 auf jeder der Maschinenstrecken 11, so daß jeweils die Spulen von zwei Maschinenstrecken 11b, 11c bzw. 11d und 11e mit einer Reihe 45 bzw. 46 über Fadenführungen 47 bzw. 48 verbunden sind.

Beim Beginn des Spinnens werden zunächst die beiden inneren Förderzüge auf die Maschinenstrecken 11c und 11d eingefahren und deren Spulen 43c bzw. 43d mit den entsprechenden Spinnstellen in den Reihen 45 und 46 verbunden. Während die Spulen 43c bzw. 43d bereits abgesponnen werden, werden die Maschinenstrecken 11b bzw. 11e mit den Förderzügen für die Spulen 43b und 43e beschickt und die Spulen 43b und 43e mit den ihnen zugeordneten Spinnstellen in den Reihen 45 und 46 verbunden. Danach werden die Züge in die äußeren Maschinenstrecken 11a bzw. 11f eingefahren. Sind nun die Spulen 43c bzw. 43d abgesponnen, so werden in die dadurch frei werdenden Spinnstellen die Lunten entsprechender Spulen 43a bzw. 43f auf den äußeren Maschinenstrecken 11a bzw. 11f eingeführt. Sind alle Spulen auf den inneren Maschinenstrecken 11c bzw. 11d leer, so werden die leeren Züge nach hinten aus der Ringspinnmaschine 2 herausgefahren, während von vorn Züge mit vollen Spulen aus einer der Lagerstrecken 17 der Transportebene II in die frei gewordenen Maschinenstrecken 11c bzw. 11d eingefahren werden. Werden nun die Spulen der mittleren Maschinenstrecken 11b bzw. 11e leer, so können die dadurch frei werdenden Spinnstellen 45 bzw. 46 durch Spulen 43c bzw. 43d der innersten Reihen beschickt werden. Die leeren Züge auf den Maschinenstrecken 11b bzw. 11e werden nach hinten herausgefahren, während neue Züge mit vollen Spulen von einer der Lagerstrecken 17 von vorn in die Maschinenstrecken 11b bzw. 11e eingefahren werden. Diese vollen Spulen 43b, 43e können dann die leer werdenden Spulen auf den äußeren Maschinenstrekken 11a bzw. 11f ersetzen. Um diese Funktion sicherzustellen, müssen sich zweckmäßigerweise auf jeder der Maschinenstrecken 11a bis 11f so viele Spulen befinden, daß von einer Maschinenstrecke jeweils die Hälfte der Spinnstellen einer Reihe 45 bzw. 46 beschickt werden kann. Auf jeder Seite der Ringspinnmaschine 2 befinden sich somit 50 % mehr Spulen als Spinnstellen in der entsprechenden Reihe 45 bzw. 46 vorhanden sind.

In Abwandlung der beschriebenen und gezeichneten Ausführungsbeispiele können beispielsweise Einzelheiten verschiedener Ausführungsformen untereinander kombiniert werden. So kann beispielsweise der Revolverlift aus Fig. 3 mit der wendelförmigen Verbindungseinrichtung aus den Fig. 1 oder 2 zusammen verwendet werden. Auch die anderen beschriebenen Verbindungseinrichtungen können ohne weiteres kombiniert werden, falls dies aus konstruktiven Gründen oder aus Gründen des Platzbedarfs wünschenswert sein sollte. Auch mit den Geradführungen ist es selbstverständlich möglich, eine oder alle Schienen nach Bedarf auch auf Zwischenebenen zu überführen. Schließlich kann die Anzahl der festen oder der verschiebbaren Maschinenstrecken variiert werden.

**Patentansprüche**

1. Hänge-Transportsystem zum innerbetrieblichen Beliefern von Spinnereimaschinen (2) mit Spulen (43), mit mindestens einer Lagerstrecke (17,25a bis 25c,29,29a bis 29c) zum Zwischenlagern der Spulen, die mit mindestens einer Maschinenstrecke (11,12,13,25e bis 26g,29,29a-29c) verbunden ist, **dadurch gekennzeichnet,** daß die Maschinenstrecke (11,12,13,25e bis 25g,29,29a bis 29c) auf mindestens einer ersten Transportebene (I) und die Lagerstrecke (17,25a bis 25c,29,29a bis 29c) auf mindestens einer mit Abstand und im wesentlichen senkrecht über der ersten Transportebene (I) angeordneten zweiten Transportebene (II) angeordnet ist, und daß eine Verbindungseinrichtung (14,18,21,28,38,40) zum Überbrücken des Abstandes vorgesehen ist.

2. Hänge-Transportsystem nach Anspruch 1, **dadurch gekennzeichnet,** daß die Lagerstrecke (17,25a bis 25c,29,29a bis 29c) und die Maschinenstrecke (11,12, 13,25e bis 25g,29,29a bis 29c) parallel zueinander verlaufen.

3. Hänge-Transportsystem nach einem der Ansprüche 1 oder 2, **dadurch gekennzeichnet,** daß die Länge der Lagerstrecke (17,25a bis 25c,29,29a bis 29c) im wesentlichen der Länge der Maschinenstrecke (11,12,13,25e bis 25g,29,29a bis 29c) entspricht.

4. Hänge-Transportsystem nach einem der Ansprüche 1 oder 2, **dadurch gekennzeichnet,** daß die Lagerstrecke (17,25a bis 25c,29,29a bis 29c) und die Maschinenstrecke (11,12,13,25e bis 25g,29,29a bis 29c) über die Länge der Spinnmaschine (2,3,4), insbesondere zum Partienspinnen, unterteilt sind.

5. Hänge-Transportsystem nach einem der Ansprüche 1 bis 4, **dadurch gekennzeichnet,** daß die Verbindungseinrichtung als wendelförmig geführter Schienenstrang (14,18) ausgebildet ist.

6. Hänge-Transportsystem nach Anspruch 5, **dadurch gekennzeichnet,** daß im wendelförmig geführten Schienenstrang (18) mindestens eine zusätzliche Zwischenweiche (19,20) angeordnet ist.

7. Hänge-Transportsystem nach einem der Ansprüche 1 bis 4, **dadurch gekennzeichnet,** daß die Verbindungseinrichtung als Revolverlift (21) ausgebildet ist, in dem Schienenstücke (25a bis 25c bzw. 25e bis 25g) für die Lager- und die Maschinenstrecke angeordnet sind.

8. Hänge-Transportsystem nach Anspruch 7, **dadurch gekennzeichnet,** daß der Revolverlift (21) zwei mit Abstand zueinander angeordnete drehbare Scheiben (22) aufweist, in denen die Schienenstücke (25a bis 25c bzw. 25e bis 25g) mitnehmbar gelagert sind, und daß eine Kulissenführung (27) vorgesehen ist, die die Schienenstücke (25a bis 25c bzw. 25e bis 25g) führt.

9. Hänge-Transportsystem nach einem der Ansprüche 1 bis 4, **dadurch gekennzeichnet,** daß die Verbindungseinrichtung durch ein Geradführungsgetriebe (28,38,40) gebildet ist.

10. Hänge-Transportsystem, insbesondere nach einem der Ansprüche 1 bis 9, für eine Ringspinnmaschine mit einer Mehrzahl von Spinnstellen (45,46), einem Gatter (42) und einer Mehrzahl von Maschinenstrecken (11), die direkt im Gatter (42) angeordnet sind, wobei jede Maschinenstrecke (11) zum Positionieren einer bestimmten Anzahl Spulen (43) während des Abspinnens ausgebildet ist, **dadurch gekennzeichnet,** daß die Anzahl der Maschinenstrecken (11) derart gewählt ist, daß eine die Anzahl der Spinnstellen (45,46) übersteigende Anzahl Spulen (43) positioniert ist.

11. Hänge-Transportsystem nach Anspruch 10, **dadurch gekennzeichnet,** daß pro Seite des Gatters (42) drei Maschinenstrecken (11a bis 11c bzw. 11d bis 11f) vorgesehen sind, wobei jede Maschinenstrecke (11) im wesentlichen halb so viel Spulen (43) aufweist wie Spinnstellen (45,46) an dieser Seite des Gatters (42) vorgesehen sind.

## Claims

1. Suspended transport system for the in-house feeding of spinning machines (2) with bobbins (43), with at least one storage zone (17, 25a to 25c, 29, 29a to 29c) for the intermediate storage of the bobbins, which is connected to at least one machine zone (11, 12, 13, 25e to 25g, 29, 29a to 29c), characterised in that the machine zone (11, 12, 13, 25e to 25g, 29, 29a to 29c) is arranged on at least one first transport plane (I), and the storage zone (17, 25a to 25c, 29, 29a to 29c) is arranged on at least one second transport plane (II) located at a spacing from and essentially vertically above the first transport plane (I), and in that a connecting device (14, 18, 21, 28, 38, 40) is provided for bridging the spacing.

2. Suspended transport system according to Claim 1, characterised in that the storage zone (17, 25a to 25c, 29, 29a to 29c) and the machine zone (11, 12, 13, 25e to 25g, 29, 29a to 29c) extend parallel to one another.

3. Suspended transport system according to one of Claims 1 or 2, characterised in that the length of the storage zone (17, 25a to 25c, 29, 29a to 29c) corresponds essentially to the length of the machine zone (11, 12, 13, 25e to 25g, 29, 29a to 29c).

4. Suspended transport system according to one of Claims 1 or 2, characterised in that the storage zone (17, 25a to 25c, 29, 29a to 29c) and the machine zone (11, 12, 13, 25e to 25g, 29, 29a to 29c) are subdivided over the length of the spinning machine (2, 3, 4), especially for batch spinning.

5. Suspended transport system according to one of Claims 1 to 4, characterised in that the connecting device is designed as a helically guided rail track (14, 18).

6. Suspended transport system according to Claim 5, characterised in that at least one additional intermediate switch (19, 20) is arranged in the helically guided rail track (18).

7. Suspended transport system according to one of Claims 1 to 4, characterised in that the connecting device is designed as a turret lift (21), in which are arranged rail sections (25a to 25c and 25e to 25g) for the storage zone and machine zone respectively.

8. Suspended transport system according to Claim 7, characterised in that the turret lift (21) has two rotatable discs (22) which are arranged at a spacing from one another and in which the rail sections (25a to 25c and 25e to 25g) are mounted driveably, and in that there is a slotted guide (27) which guides the rail sections (25a to 25c and 25e to 25g).

9. Suspended transport system according to one of Claims 1 to 4, characterised in that the connecting device is formed by a straight-line mechanism (28, 38, 40).

10. Suspended transport system, especially according to one of Claims 1 to 9, for a ring spinning machine with a plurality of spinning stations (45, 46), with a creel (42) and with a plurality of machine zones (11) arranged directly in the creel (42), each machine zone (11) being designed for positioning a specific number of bobbins (43) during the spinning-off, characterised in that the number of machine zones (11) is selected in such a way that a number of bobbins (43) exceeding the number of spinning stations (45, 46) is positioned.

11. Suspended transport system according to Claim 10, characterised in that three machine zones (11a to 11c and 11d to 11f) are provided on each side of the creel (42), each machine zone (11) having essentially half as many bobbins (43) as there are spinning stations (45, 46) on this side of the creel (42).

**Revendications**

1. Système de transport suspendu destiné à alimenter, en atelier, des métiers à filer (2) en bobines (43) et comportant au moins une voie de stockage (17, 25a à 25c, 29, 29a à 29c) pour l'entreposage des bobines, laquelle voie est reliée à au moins un voie de machine (11, 12, 13, 25e à 25g, 29, 29a à 29c), caractérisé en ce que la voie de machine (11, 12, 13, 25e à 25g, 29, 29a à 29c) est disposé sur au moins un premier plan de transport (I) et l'aire de stockage (17, 25a à 25c, 29, 29a à 29c) est disposée sur au moins un deuxième plan de transport (II) placé à une certaine distance et sensiblement verticalement au-dessus du premier plan de transport (I) et en ce qu'il est prévu un dispositif de liaison (14, 18, 21, 28, 38, 40) pour franchir cette distance.

2. Système de transport suspendu selon la revendication 1, caractérisé en ce que la voie de stockage (17, 25a à 25c, 29, 29a à 29c) et la voie de machine (11, 12, 13, 25e à 25g, 29, 29a à 29c) s'étendent parallèlement l'un à l'autre.

3. Système de transport suspendu selon la revendication 1 ou 2, caractérisé en ce que la longueur de la voie de stockage (17, 25a à 25c, 29, 29a à 29c) correspond sensiblement à la longueur de la voie de machine (11, 12, 13, 25e à 25g, 29, 29a à 29c).

4. Système de transport suspendu selon la revendication 1 ou 2, caractérisé en ce que la voie de stockage (17, 25a à 25c, 29, 29a à 29c) et la voie de machine (11, 12, 13, 25e à 25g, 29, 29a à 29c) sont répartis sur la longueur du métier à filer (2, 3, 4), en particulier pour la filature par lots.

5. Système de transport suspendu selon l'une quelconque des revendications précédentes, caractérisé en ce que le dispositif de liaison est réalisé sous la forme d'une file de rails (14, 18) s'étendant hélicoïdalement.

6. Système de transport suspendu selon la revendication 5, caractérisé en ce que dans la file de rails (18) s'étendant hélicoïdalement est montée au moins une aiguille intermédiaire additionnelle (19, 20).

7.  Système de transport suspendu selon l'une quelconque des revendications 1 à 4, caractérisé en ce que le dispositif de liaison est réalisé sous la forme d'un monte-charge revolver (21) dans lequel des coupons de rail (25a à 25c ; 25e à 25g) sont disposés pour la voie de stockage et la voie de machine.

8.  Système de transport suspendu selon la revendication 7, caractérisé en ce que le monte-charge revolver (21) comporte deux disques rotatifs (22) montés à une certaine distance l'un de l'autre et dans lesquels les coupons de rail (25a à 25c ; 25e à 25g) sont montés de façon à pouvoir être entraînés et en ce qu'il est prévu un guide à coulisse (27) qui guide les coupons de rail (25a à 25c ; 25e à 25g).

9.  Système de transport suspendu selon l'une quelconque des revendications 1 à 4, caractérisé en ce que le dispositif de liaison est formé d'un mécanisme de guidage rectiligne (28, 38, 40).

10. Système de transport suspendu, en particulier selon l'une quelconque des revendications précédentes, pour un métier à filer continu à anneau comportant un certain nombre de postes de filage (45, 46), un râtelier (42) et un certain nombre de voies de machine (11) qui sont disposés directement dans le râtelier (42), chaque voie de machine (11) étant réalisé en vue du positionnement d'un nombre déterminé de bobines (43) lors du processus de filage, caractérisé en ce que le nombre de voies de machine (11) est choisi de telle manière qu'il soit positionné un nombre déterminé de bobines (43) qui excède le nombre des postes de filage (45, 46).

11. Système de transport suspendu selon la revendication 10, caractérisé en ce que par côté du râtelier (42) sont prévus trois voies de machine (11a à 11c ; 11d à 11f), chaque voie de machine (11) présentant sensiblement un nombre moitié moins grand de bobines (43) que celui des postes de filage (45, 46) prévus du côté concerné du râtelier (42).

FIG.1

FIG. 2

FIG.3

EP 0 311 959 B1

EP 0 311 959 B1

FIG.4

FIG.5

FIG.6

FIG.7